# FASCICULE DE BREVET EUROPEEN

(11) **EP 3 519 700 B1**
(45) Date de publication et mention de la délivrance du brevet: **02.12.2020**
(21) Numéro de dépôt: 17784368.7
(22) Date de dépôt: 26.09.2017
(51) Int. Cl.: F04D 27/02, F02K 3/075, F01D 17/10

(54) **DÉFLECTEUR DE FLUX D'UN SYSTÈME DE VANNE DE DÉCHARGE, SYSTÈME DE VANNE DE DÉCHARGE ET TURBOMACHINE COMPRENANT UN TEL SYSTÈME DE VANNE DE DÉCHARGE**
STRÖMUNGSABLENKER FÜR EIN AUSLASSVENTILSYSTEM, AUSLASSVENTILSYSTEM UND TURBOMASCHINE MIT SOLCH EINEM AUSLASSVENTILSYSTEM
FLOW DEFLECTOR FOR A DISCHARGE VALVE SYSTEM, DISCHARGE VALVE SYSTEM AND TURBO-ENGINE COMPRISING SUCH A DISCHARGE VALVE SYSTEM

(30) Priorité: 30.09.2016 FR 1659475
(43) Date de publication de la demande: 07.08.2019
(73) Titulaire: Safran Aircraft Engines, 75015 Paris (FR)
(72) Inventeur: LEYKO, Matthieu, 77550 Moissy-Cramayel (FR); SZYDLOWSKI, Julien, Antoine, Henri, Jean, 77550 Moissy-Cramayel (FR)
(74) Mandataire: Gevers & Orès
(86) Numéro de dépôt international: PCT/FR2017/052589
(87) Numéro de publication internationale: WO 2018/060588

(56) Documents cités:
- EP-A1- 2 891 769
- EP-A2- 2 062 688
- US-A1- 2009 188 257
- US-A1- 2010 199 633

## Description

### 1. Domaine de l'invention

La présente invention concerne le domaine des turbomachines, notamment des turbomachines à double flux pour aéronefs. Elle vise en particulier, un système de vanne de décharge permettant de décharger une partie d'un flux d'air passant dans un compresseur dans une veine de la turbomachine. Elle concerne également une turbomachine comprenant un tel système de vanne de décharge.

### 2. Etat de la technique

Une turbomachine à double flux comprend de manière générale de l'amont vers l'aval en fonction de l'écoulement des gaz dans la turbomachine au moins un compresseur, une chambre de combustion et une turbine formant un générateur de gaz installé dans un carter intérieur. Une soufflante mobile est disposée en amont du générateur de gaz et dans un carter extérieur lequel comprend également le carter intérieur. L'air traversant la turbomachine est divisé en un flux primaire ou flux d'air chaud circulant dans le générateur de gaz et un flux secondaire ou flux d'air froid issu de la soufflante circulant autour du carter intérieur. Le flux chaud est comprimé par des étages de compresseur de la turbomachine avant d'entrer dans la chambre de combustion. L'énergie de combustion est récupérée par des étages de turbine qui participent à l'entraînement des étages de compresseur et de la soufflante mobile amont et donc à la poussée de la turbomachine. Le flux froid participe également à la poussée de la turbomachine.

Les turbomachines sont également équipées d'un ou de plusieurs systèmes de vanne de décharge connue sous la désignation anglaise de «Handling Bleed Valve» (siglée HBV) permettant de prélever une partie du flux d'air chaud comprimé par le compresseur et en particulier, un compresseur haute pression, et de l'éjecter dans le flux froid avec lequel celui-ci se mélange. Cette décharge a pour but de stabiliser le fonctionnement du compresseur en limitant les phénomènes de pompage, de décollement tournant ou de flottement.

Il est connu des documents US-A1-2010/199633, US-A1-2009/188257, EP-A1-2891769 et EP-A2-2062688 divers types de système de vanne de décharge comportant un déflecteur de flux pourvu d'une pluralité d'ouvertures orientées dans la même direction. Ces ouvertures déchargent le flux d'air chaud du compresseur, soit dans le sens de circulation du flux d'air froid, soit dans le sens inverse à la circulation du flux d'air froid. Ces agencements permettent d'augmenter l'incorporation du flux d'air chaud déchargé dans le flux d'air froid pour limiter les contraintes thermiques sur les structures et/ou composants voisin(e)s qui ne sont pas configuré(e)s pour résister à des températures élevées.

Toutefois, ces agencements ne considèrent ou ne présentent pas de solutions permettant de limiter les perturbations de la circulation du flux d'air froid généré par la soufflante qui remonte la ligne de fonctionnement de la soufflante dans un champ compression-débit et impacte le fonctionnement de la turbomachine.

### 3. Objectif de l'invention

Le présent déposant s'est donc fixé comme objectif de fournir un déflecteur de flux d'un système de vanne de décharge de compresseur qui permette de limiter la perturbation de la circulation du flux d'air froid tout en limitant les contraintes thermiques sur l'environnement de la veine dans laquelle circule un flux d'air.

### 4. Exposé de l'invention

On parvient à cet objectif conformément à l'invention grâce à un déflecteur de flux d'un système de vanne de décharge d'un compresseur de turbomachine double flux, le déflecteur de flux étant destiné à être agencé au moins en partie dans une veine de la turbomachine dans laquelle circule un flux d'air et comprenant une paroi pourvue d'une pluralité de canaux d'éjection aptes à décharger un flux d'air de décharge du compresseur dans la veine de la turbomachine, les canaux d'éjection étant agencés en rangées suivant des directions d'alignement sensiblement parallèles à un plan axial du déflecteur, les canaux d'éjection de chaque rangée étant orientés suivant un angle défini entre une droite normale à la paroi et les axes des canaux d'éjection, et variant en décroissant d'un bord amont à un bord aval de la paroi définis selon la direction de déplacement du flux d'air, et au moins les canaux d'au moins une rangée située à proximité du bord amont étant orientés de manière que le flux de décharge est sensiblement affleurant avec la paroi du déflecteur et suivant la direction de déplacement du flux d'air.

En particulier, chaque angle varie en décroissant selon la première direction de déplacement du flux d'air.

Suivant une caractéristique de l'invention, au moins une rangée située à proximité du bord aval est pourvue de canaux orientés de manière que le flux de décharge est sensiblement parallèle à l'axe central du déflecteur. En d'autres termes, le flux d'air de décharge traversant les canaux d'éjection est guidé suivant une direction sensiblement transversale au sens de circulation du flux en aval.

Ce déflecteur de flux permet de résoudre les inconvénients précités. En effet, ce déflecteur de flux permet de décharger le flux d'air de décharge du compresseur suivant une orientation qui affleure et qui rase quasiment la paroi du déflecteur en amont de manière à ne pas perturber la circulation du flux d'air issu de la soufflante de la turbomachine. Les rangées en aval permettent de décharger un flux d'air de décharge suivant une orientation quasi verticale pour d'une part, ne pas brûler les structures et/ou composants voisin(e)s de la veine secondaire et d'autre part, créer un « mur fluidique » qui va empêcher que le flux d'air issu de la soufflante ne plaque le flux d'air de décharge en aval de la soufflante contre les parois de la veine secondaire où circule le flux d'air de soufflante.

Selon une caractéristique de l'invention, l'angle des canaux varie entre 65° et 5° entre le bord amont et le bord aval. De la sorte, les angles diminuent progressivement et le flux d'air de décharge présente un redressement évolutif qui s'incorpore dans le flux d'air issu de la soufflante dans la veine secondaire sans impact négatif sur les performances de la soufflante tout en protégeant les parois de la veine secondaire des contraintes thermiques.

Selon une caractéristique de l'invention, les canaux d'éjection de chaque rangée sont orientés suivant le même angle.

Selon une caractéristique de l'invention, chaque canal d'éjection est orienté suivant un angle compris entre 10° et 60°.

Suivant une caractéristique de l'invention, chaque canal d'éjection présente une section circulaire constante.

Suivant une caractéristique de l'invention, la paroi du déflecteur de flux est de forme sphérique.

De manière avantageuse, mais non limitativement, chaque canal d'éjection s'étend de part et d'autre de la paroi et présente une section circulaire constante de manière à faciliter la fabrication du déflecteur de flux et de permettre l'agencement en trois dimensions des canaux dans la paroi.

Selon une autre caractéristique de l'invention, le déflecteur de flux comprend un corps cylindrique, de préférence, mais non limitativement, de section circulaire couplée à une entrée d'air et à la paroi pourvue des canaux d'éjection, le corps définissant un passage entre l'entrée d'air et le déflecteur de flux.

De manière avantageuse, mais non limitativement, le nombre de rangées de canaux d'éjection est compris entre 20 et 30.

En particulier, les canaux d'éjection occupent la quasi-totalité de la surface de la paroi du déflecteur de flux.

Selon une autre caractéristique de l'invention, la paroi du déflecteur de flux comprend au moins une première série de rangées positionnée en amont et dont les angles des canaux de deux rangées consécutives sont identiques et compris entre 55° et 65° et une deuxième série de rangées positionnée en aval et comprenant au moins une rangée de canaux dont les angles sont compris entre de 5° et 15°.

Selon encore une autre caractéristique de l'invention, la paroi comprend une série intermédiaire de rangées comprise entre la première série et la deuxième série, les angles des canaux des rangées de cette série intermédiaire variant d'une valeur identique entre chaque rangée de sorte que la variation des angles soit progressive et linéaire.

De manière avantageuse, mais non limitativement, les angles des canaux des rangées de la série intermédiaire sont compris entre 3° et 8°.

L'invention concerne également un système de vanne de décharge d'un compresseur de turbomachine double flux, le système comprenant:
- un déflecteur de flux présentant l'une quelconque des caractéristiques susmentionnées,
- un conduit connecté au déflecteur de flux et comprenant une entrée d'air chaud,
- un dispositif de régulation permettant de réguler le passage du flux d'air de décharge entre l'entrée d'air chaud du conduit et le déflecteur de flux, et
- un actionneur agissant sur le dispositif de régulation de manière que le dispositif occupe au moins une première position dans laquelle l'entrée d'air chaud est fermée et une deuxième position dans laquelle l'entrée d'air chaud est libérée ou ouverte.

Suivant une caractéristique de l'invention, le dispositif de régulation peut occuper une position intermédiaire ente la première position et la deuxième position.

L'invention concerne également une turbomachine à double flux comprenant une veine primaire dans laquelle circule un flux chaud et une veine secondaire dans laquelle circule un flux froid, les veines étant séparées par un carter inter-veine, dans le carter inter-veine étant agencée au moins un système de vanne de décharge présentant l'une quelconque des caractéristiques susmentionnées. Ainsi, le flux de décharge traversant les canaux d'éjection est guidé suivant au moins une direction orientée dans le sens de circulation du flux d'air et suivant une direction sensiblement perpendiculaire au sens de circulation du flux d'air.

L'orientation de chaque canal est formée d'une composante radiale et axiale, mais de manière générale peut comporter une faible composante tangentielle constante ou permettant une légère divergence du flux de décharge (5 à 10 degrés).

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux figures annexées dans lesquels :
La figure 1 représente en coupe axiale et partielle, un exemple de turbomachine à laquelle s'applique l'invention ;
La figure 2 est une vue schématique et en coupe axiale d'une veine dans laquelle est positionné un déflecteur de flux selon l'invention;
La figure 3 représente un système de vanne de décharge comportant un dispositif de régulation et un actionneur agissant sur le dispositif de régulation ;
La figure 4 est une vue en perspective d'un exemple de déflecteur de flux selon l'invention ;
La figure 5 est une vue de dessus déflecteur de flux illustré sur la figure 4 ;
La figure 6 est une vue schématique et en coupe axiale du déflecteur de flux illustré sur la figure 5; et,
La figure 7 est une vue en coupe et de détail d'une paroi du déflecteur de flux selon l'invention.

### 6. Description de modes de réalisation de l'invention

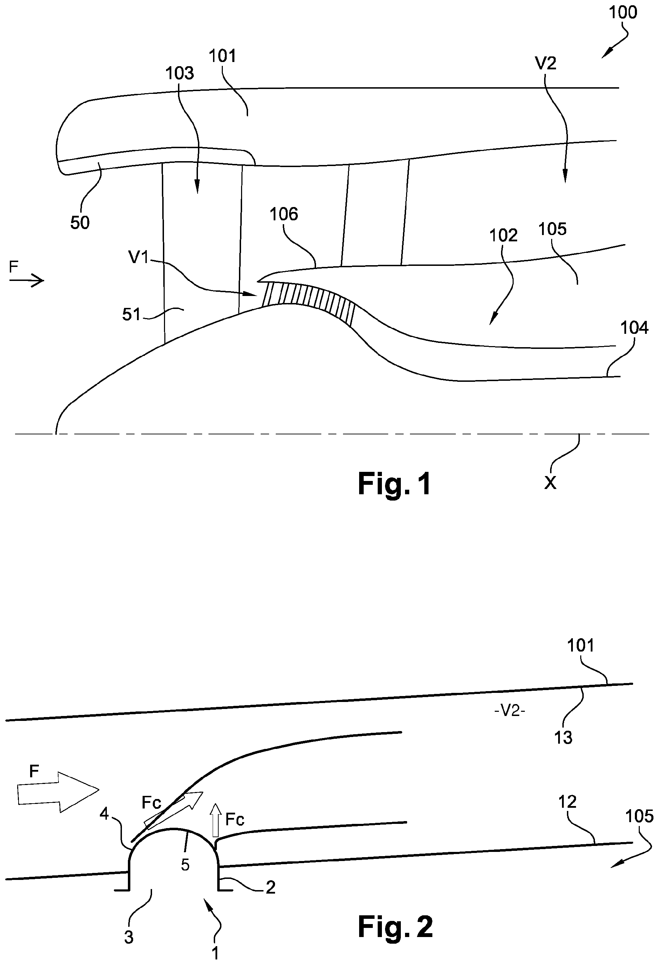

La figure 1 montre schématiquement une turbomachine pour aéronef selon l'invention. En particulier, il est représenté une turbomachine double flux qui s'étend suivant un axe X. Cette turbomachine 100 comprend de manière générale un carter externe 101 entourant un générateur de gaz 102 en amont duquel est montée une soufflante 103. Dans la présente invention, et de manière générale, les termes « amont » et « aval » sont définis par rapport à la circulation des gaz dans la turbomachine 100. Les termes « haut » et « bas » sont définis par rapport à un axe radial perpendiculaire à l'axe X.

Le générateur de gaz 102 comprend dans cet exemple, d'amont en aval, un compresseur basse pression, un compresseur haute pression, une chambre de combustion, une turbine haute pression et une turbine basse pression. Le générateur est logé dans un carter interne 104.

La soufflante 103 est ici carénée et comprend une virole 50 solidaire du carter externe 101 et entourant une pluralité d'aubes mobiles de soufflante 51 qui sont montées et qui s'étendent radialement depuis un arbre de soufflante relié à un arbre de puissance du générateur de gaz 102.

La soufflante 103 comprime l'air entrant dans la turbomachine 100 qui se divise en un flux d'air chaud circulant dans une veine primaire V1 laquelle traverse le générateur de gaz et un flux d'air froid circulant dans une veine secondaire V2 autour du générateur de gaz 102. En particulier, la veine primaire V1 et la veine secondaire V2 sont séparées par un carter inter-veine 105 annulaire disposée entre le carter externe 101 et le carter interne 104. Le flux circulant dans la veine primaire V1 est classiquement comprimé par des étages de compresseur avant d'entrer dans la chambre de combustion. L'énergie de combustion est récupérée par des étages de turbine qui assurent l'entraînement des étages de compresseur et de la soufflante. Le flux d'air F froid circulant dans la veine secondaire V2 est orienté suivant une direction axiale, sensiblement parallèle l'axe longitudinal X, et participe pour sa part à fournir la poussée de la turbomachine 100.

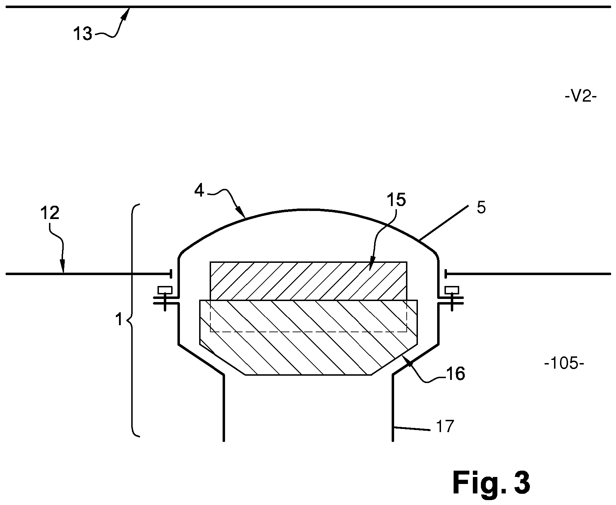

En référence aux figures 2 et 3, un système de vanne de décharge 1 est agencé entre la veine primaire V1 et la veine secondaire V2 de la turbomachine 100. Le système de vanne de décharge 1 est monté dans une paroi 12 du carter inter-veine 105 et à l'endroit du compresseur haute pression. De la sorte, l'air chaud prélevé pour décharger le compresseur haute pression est éjecté dans la veine secondaire V2. Le système de vanne de décharge 1 comprend un déflecteur de flux 4, un dispositif de régulation 16 d'air, un actionneur 15 agissant sur le dispositif de régulation 16 et un conduit 17.

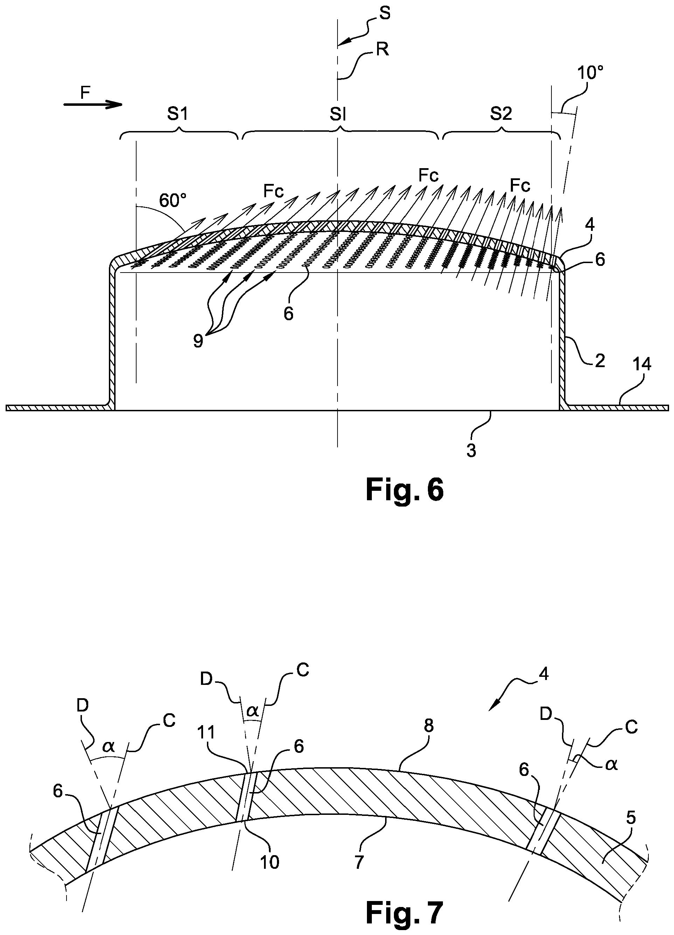

Le déflecteur de flux 4 comprend un corps 2 couplé à une entrée d'air 3 et s'étendant depuis une paroi 5. Le corps 2 présente une forme générale cylindrique de section circulaire et d'axe de révolution R (figure 6). Le déflecteur de flux 4 comprend une collerette 14 solidaire du corps 2 et entourant l'entrée d'air 3. Cette collerette 14 permet la fixation du déflecteur de flux 4 sur le conduit 17 dans le carter inter-veine 105. Le déflecteur de flux 4 est destiné à être agencé au moins en partie dans la veine secondaire V2 de sorte que le flux d'air chaud reçu du compresseur par l'entrée d'air 3 soit éjecté directement dans la veine secondaire V2 via des canaux d'éjection. Les canaux d'éjection sont situés dans la veine secondaire. Le corps 2 défini un passage de flux d'air entre l'entrée d'air 3 et les canaux d'éjection.

Le déflecteur de flux 4 est connecté au conduit 17 qui s'étend à travers le carter inter-veine 105. Pour cela, la collerette 14 comprend des trous traversant la paroi de celle-ci de part et d'autre. Les trous sont destinés à recevoir des moyens de fixation amovibles tels que des vis. Le conduit 17 comprend une entrée d'air chaud (non représentée) destinée à être en communication fluidique avec la veine primaire V1 et à recevoir une partie du flux chaud issu du compresseur haute pression. Le conduit 17 comprend également une sortie d'air chaud couplée à l'entrée d'air 3 du déflecteur de flux 4. Le conduit 17 permet le passage du flux d'air chaud du compresseur vers le déflecteur de flux 4.

Le dispositif de régulation 16 et l'actionneur 15 sont disposés dans le conduit 17. Le dispositif 16 permet de réguler le flux d'air de décharge chaud issu du compresseur. Le dispositif 16 comprend ici un pointeau mobile en translation suivant un axe radial sensiblement perpendiculaire à l'axe X. Le pointeau se déplace entre une première position dans laquelle l'air chaud issu du compresseur ne circule pas de l'entrée d'air chaud du conduit 17 vers le déflecteur de flux et une deuxième position dans laquelle l'air chaud issu du compresseur circule de l'entrée d'air chaud du conduit 17 vers le déflecteur de flux. La première position correspond à une position où l'entrée d'air chaud du compresseur est fermée et la deuxième position correspond à une position où l'entrée d'air chaud est ouverte. Le déplacement du pointeau est contrôlé par l'actionneur 15. En particulier, lorsqu'il est nécessaire de décharger l'air chaud du compresseur dans la veine secondaire V2, l'actionneur 15 entraîne le déplacement du pointeau vers le haut afin de libérer l'entrée d'air chaud. Le flux chaud issu du compresseur circule alors à travers le conduit 17 vers le déflecteur de flux 4. Un flux d'air de décharge Fc se décharge alors dans la veine V2 via des canaux d'éjections décrits ci-après.

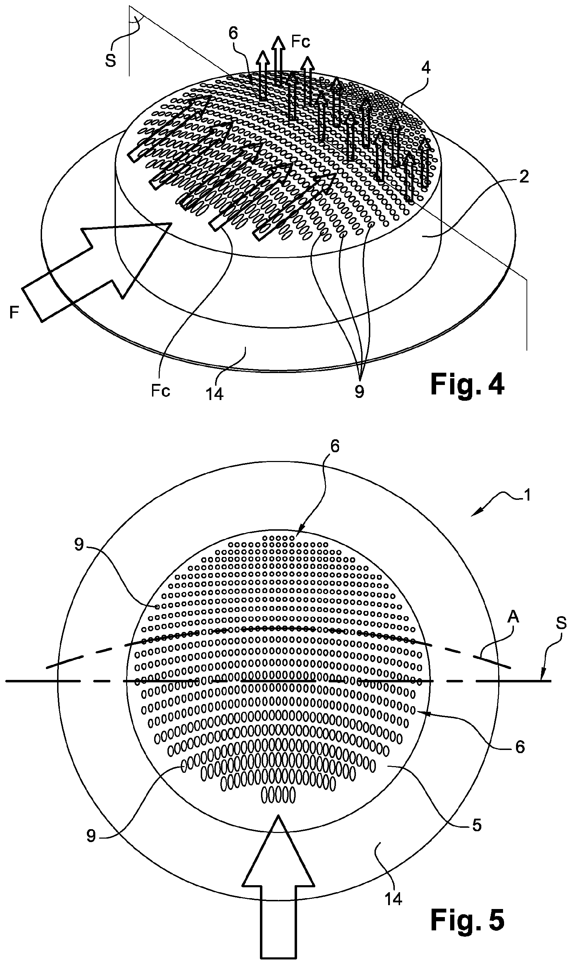

En référence aux figures 4 à 7, le déflecteur de flux 4 comprend une paroi 5 pourvue d'une pluralité de canaux d'éjection 6 aptes à décharger le flux d'air chaud issu du compresseur dans la veine secondaire V2 où circule le flux d'air F froid. Les canaux d'éjection 6 sont configurés de manière à éjecter un flux d'air de décharge Fc qui ne vient pas directement en contact avec les parois 12, 13 de la veine secondaire V2 et qui ne perturbe pas l'écoulement et la circulation du flux d'air froid. En d'autres termes, le flux d'air de décharge n'est pas éjecté de manière à s'opposer à la direction du flux d'air issu de la soufflante. La paroi 5 du déflecteur présente une forme arquée. Son épaisseur est constante. La paroi présente une épaisseur constante comprise entre 1 et 5 mm. En particulier, la paroi présente une première surface 7 interne concave tournée vers le dispositif de régulation 16 du système de vanne décharge 1 et une deuxième surface 8 externe convexe opposée à la première surface interne et tournée vers la veine secondaire V2. La paroi 5 est ici de forme sphérique. Celle-ci présente un bord périphérique circulaire. Bien entendu, le bord périphérique de la paroi, ainsi que la paroi peuvent présenter une autre forme telle que rectangulaire.

En référence à la figure 7, les canaux d'éjection 6 sont formés dans la paroi 5 et s'étendent de part et d'autre de celle-ci entre la première surface 7 et la deuxième surface 8. Les canaux d'éjection 6 présentent ici une section circulaire constante d'axe central C. Les diamètres des canaux d'éjection 6 répartis sur la paroi 5 sont ici également identiques. Dans les exemples représentés, les canaux d'éjection 6 occupent la quasi-totalité de la surface de la paroi 5. Chaque canal d'éjection 6 présente un orifice d'entrée 10 défini dans la première surface 7 et communiquant fluidiquement avec le passage du corps 2 et un orifice de sortie 11 défini dans la deuxième surface 8 et communiquant fluidiquement avec la veine secondaire V2.

Chaque canal d'éjection 6 est orienté suivant un angle α défini entre l'axe central C et une droite D normale à la paroi 5 du déflecteur.

Suivant une caractéristique de l'invention, les angles des canaux d'éjection 6 varient en décroissant entre un bord amont et un bord aval de la paroi définis selon la direction de déplacement du flux d'air de soufflante.

Chaque angle α est compris entre 10° et 60°.

De manière avantageuse, mais non limitativement, les canaux d'éjection 6 sont disposés en plusieurs rangées 9 suivant des directions d'alignement A (cf. figure 5). L'arrondi de la direction d'alignement observé sur les figures 4 et 5 est dû à la forme sphérique de la paroi 5. Les directions d'alignement sont sensiblement parallèles à un plan axial S de la paroi 5 passant par l'axe de révolution R du corps. Ce plan axial S est sensiblement perpendiculaire à la direction de déplacement du flux d'air de soufflante. Le nombre de rangées 9 de canaux d'éjection est compris entre 20 et 30. Dans l'exemple représenté, la paroi du 5 déflecteur de flux 4 comprend 24 rangées de canaux d'éjection formant chacune une lame de flux de décharge. Chaque rangée 9 comprend entre 4 et 50 canaux d'éjection 6. Il est entendu que le nombre de rangées et le nombre de canaux d'éjection par rangée est fonction des dimensions du déflecteur de flux et des dimensions des canaux d'éjection et du débit que l'on souhaite faire passer dans le diffuseur quand la vanne est ouverte.

Suivant une caractéristique de l'invention, les canaux d'éjection de chaque rangée sont orientés suivant le même angle α de sorte à former une lame de flux d'air de décharge Fc. Comme cela est illustré sur la figure 7, l'angle des rangées de canaux d'éjection 6 varie entre 65° et 5° de l'amont vers l'aval par rapport à la direction de déplacement du flux d'air F, lorsque le système de vanne de décharge 1 est installé dans la turbomachine 100. En particulier, cette variation est définie du bord amont au bord aval de la paroi 5 par rapport au plan axial S. De la sorte, les lames de flux d'air de décharge Fc traversant les canaux d'éjection 6 sont guidées suivant une direction orientée dans le sens de circulation du flux froid en amont et suivant une direction sensiblement transversale au sens de circulation du flux froid à l'aval. Au moins une rangée située à proximité du bord amont est pourvue de canaux orientés de manière que le flux de décharge Fc soit sensiblement affleurant et tangent avec la paroi du déflecteur et suivant la direction de déplacement du flux d'air (F) de soufflante. De même, au moins une rangée située à proximité du bord aval est pourvue de canaux orientés de manière que le flux de décharge soit sensiblement parallèle à l'axe R central du déflecteur.

En référence à la figure 6, les rangées 9 comprennent une première série S1 de rangées positionnée en amont et dont les angles des canaux de deux rangées consécutives sont identiques. Dans cet exemple, la première série S1 est disposée en amont du plan axial S dans laquelle des rangées 9 sont orientées suivant le même angle. De manière avantageuse, mais non limitativement, l'angle des canaux d'éjection 6 de ces rangées de cette première série S1 est de 60° de manière que les lames de flux d'air de décharge FC soient sensiblement tangents avec la paroi 5 du déflecteur et que ceux-ci ne perturbent pas la circulation du flux d'air F froid. Par ailleurs, le fait que les flux soient tangents avec la paroi du déflecteur évitent que ceux-ci viennent en contact directement avec les parois de la veine secondaire et, en particulier, la paroi interne 13 du carter externe 101. En aval de cette première série S1 de rangées est prévue une deuxième série S2 de rangées dans laquelle, l'angle des canaux d'au moins une rangée 9 est orienté suivant un angle α compris entre 5° et 15° de manière que le flux soit sensiblement vertical pour ne pas brûler les parois de la veine secondaire, et en particulier la paroi interne 12 du carter inter-veine 105. Dans cet exemple, l'angle des canaux de cette deuxième série S2 est de 10°. Une série intermédiaire SI de rangées est disposée entre la première série S1 de rangées et la deuxième série S2 de rangées. Dans cette série intermédiaire SI de rangées, l'angle α d'orientation des canaux des rangées varie à chaque rangée consécutive entre 3° et 8°. En d'autres termes, deux rangées de canaux d'éjection consécutives présentent des angles qui diffèrent de 3° à 8°.

Chaque série a un nombre donné de rangées 9. Préférentiellement, mais non limitativement, les première et deuxième séries S1, S2 comportent un nombre sensiblement identique de rangées 9. La série intermédiaire SI comporte deux fois plus de rangées 9 que l'une ou l'autre des première et deuxième séries. En d'autres termes, le nombre de rangées de la série intermédiaire est supérieur au nombre de rangées de la première série. De même, le nombre de rangées de la série intermédiaire est supérieur au nombre de rangées de la deuxième série. Cela permet également une progression linéaire dans le déchargement du flux d'air de décharge dans la veine de décharge.

Ainsi, lorsque le flux d'air de décharge est éjecté dans la veine secondaire V2, celui-ci est orienté suivant plusieurs lames dont une première série de lames de flux d'air de décharge sensiblement tangents avec la paroi 5 du déflecteur de flux, une série de lames de flux d'air de décharge intermédiaire et une deuxième série de lames de flux d'air de décharge sensiblement vertical. La première série de lames de flux d'air circulant au centre de la veine secondaire sensiblement axialement et venant en contact de la deuxième série de lames change la direction verticale des lames de flux d'air de la deuxième série pour que celles-ci circulent également au centre de la veine V2 et à distance des parois 12, 13. La circulation et l'écoulement du flux d'air F froid n'est pas perturbé.

## Revendications

1. Déflecteur de flux (4) d'un système de vanne de décharge (1) d'un compresseur de turbomachine double flux, le déflecteur de flux (4) étant destiné à être agencé au moins en partie dans une veine (V1, V2) de la turbomachine dans laquelle circule un flux d'air et comprenant une paroi (5) pourvue d'une pluralité de canaux d'éjection (6) aptes à décharger un flux d'air de décharge (Fc) du compresseur dans la veine (V1, V2) de la turbomachine (100), les canaux d'éjection (6) étant agencés en rangées (9) suivant des directions d'alignement sensiblement parallèles à un plan axial (S) du déflecteur, les canaux d'éjection (6) de chaque rangée (9) étant orientés suivant un angle (a) défini entre une droite normale (D) à la paroi (5) et les axes (C) des canaux d'éjection, **caractérisé en ce que** les angles des canaux d'éjection varient en décroissant d'un bord amont à un bord aval de la paroi (5) définis selon la direction de déplacement du flux d'air (F) de soufflante et **en ce qu'**au moins les canaux d'au moins une rangée située à proximité du bord amont sont orientés de manière que le flux de décharge (Fc) est sensiblement affleurant avec la paroi du déflecteur et suivant la direction de déplacement du flux d'air (F).

2. Déflecteur de flux (4) selon la revendication précédente, caractérisé en qu'au moins une rangée située à proximité du bord aval est pourvue de canaux orientés de manière que le flux de décharge est sensiblement parallèle à l'axe central du déflecteur.

3. Déflecteur de flux (4) selon l'une des revendications précédentes, **caractérisé en ce que** l'angle (α) des canaux (6) varie de 65° à 5° entre le bord amont et le bord aval.

4. Déflecteur de flux (4) selon l'une des revendications précédentes, **caractérisé en ce que** les canaux d'éjection (6) de chaque rangée sont orientés suivant le même angle (a).

5. Déflecteur de flux (4) selon l'une quelconque des revendications précédentes, **caractérisé en ce que** chaque canal d'éjection (6) présente une section circulaire constante.

6. Déflecteur de flux (4) selon l'une quelconque des revendications précédentes, **caractérisé en ce que** la paroi est de forme sphérique.

7. Déflecteur de flux (4) selon l'une quelconque des revendications précédentes, **caractérisé en ce que** le nombre de rangées (9) de canaux d'éjection (6) est compris entre 20 et 30.

8. Déflecteur de flux (4) selon l'une quelconque des revendications précédentes, **caractérisé en ce que** la paroi (5) comprend au moins une première série (S1) de rangées positionnée en amont et dont les angles des canaux de deux rangées consécutives sont identiques et compris entre 55° et 65° et une deuxième série (S2) de rangées positionnée en aval et comprenant au moins une rangée de canaux dont les angles sont compris entre 5° et 15°.

9. Déflecteur de flux (4) selon la revendication précédente, **caractérisé en ce que** la paroi (5) comprend une série intermédiaire (SI) de rangées comprise entre la première série (S1) et la deuxième série (S2), les angles des canaux des rangées de la série intermédiaire (SI) variant d'une valeur identique entre chaque rangée.

10. Déflecteur de flux (4) selon la revendication précédente, **caractérisé en ce que** la variation des angles des canaux des rangées de la série intermédiaire (SI) est comprise entre 3° et 8°.

11. Système de vanne de décharge (1) d'un compresseur de turbomachine double flux, le système comprenant:
- un déflecteur de flux (4) selon l'une quelconque des revendications 1 à 10,
- un conduit (17) connecté au déflecteur de flux (4) et comprenant une entrée d'air chaud,
- un dispositif de régulation (16) permettant de réguler le passage du flux d'air de décharge (Fc) entre l'entrée d'air chaud du conduit (17) et le déflecteur de flux (4), et
- un actionneur (15) agissant sur le dispositif de régulation (16) de manière que le dispositif (16) occupe au moins une première position dans laquelle l'entrée d'air chaud est fermée et une deuxième position dans laquelle l'entrée d'air chaud est libérée.

12. Turbomachine (100) à double flux comprenant une veine primaire (V1) dans laquelle circule un flux d'air chaud et une veine secondaire (V2) dans laquelle circule un flux d'air (F) froid, les veines (V1, V2) étant séparées par un carter inter-veine (105), **caractérisée en ce que** dans le carter inter-veine (105) est agencée au moins un système de vanne de décharge (1) selon la revendication précédente.

## Patentansprüche

1. Stromdeflektor (4) eines Ablassventilsystems (1) eines Doppelstrom-Turbomaschinenkompressors, wobei der Stromdeflektor (4) dazu bestimmt ist, mindestens zum Teil in einem Strom (V1, V2) der Turbomaschine, in dem ein Luftstrom zirkuliert, eingerichtet zu sein, und eine Wand (5) umfasst, die mit einer Vielzahl von Ausstoßkanälen (6) versehen ist, die dazu geeignet sind, einen Ablassluftstrom (Fc) des Kompressors in dem Strom (V1, V2) der Turbomaschine (100) abzulassen, wobei die Ausstoßkanäle (6) in Reihen (9) entlang von Fluchtungsrichtungen eingerichtet sind, die im Wesentlichen zu einer axialen Ebene (S) des Deflektors eingerichtet sind, wobei die Ausstoßkanäle (6) jeder Reihe (9) gemäß einem Winkel (a) ausgerichtet sind, der zwischen einer Normalenlinie (D) zur Wand (5) und den Achsen (C) der Ausstoßkanäle definiert ist, **dadurch gekennzeichnet, dass** die Winkel der Ausstoßkanäle von einem stromaufwärtigen Rand zu einem stromabwärtigen Rand der Wand (5), die entlang der Bewegungsrichtung des Lüfterluftstroms (F) definiert sind, abnehmend variieren, und dass mindestens die Kanäle mindestens einer Reihe, die sich in der Nähe des stromaufwärtigen Rands befindet, derart ausgerichtet sind, dass der Ablassluftstrom (Fc) im Wesentlichen mit der Wand des Deflektors und entlang der Bewegungsrichtung des Luftstroms (F) bündig ist.

2. Stromdeflektor (4) nach dem vorstehenden Anspruch, **dadurch gekennzeichnet, dass** mindestens eine Reihe, die in der Nähe des stromabwärtigen Rands liegt, mit Kanälen versehen ist, die derart ausgerichtet sind, dass der Ablassstrom im Wesentlichen zu der Mittenachse des Deflektors parallel ist.

3. Stromdeflektor (4) nach einem der vorstehenden Ansprüche, **dadurch gekennzeichnet, dass** der Winkel (a) der Kanäle (6) von 65° bis 5° zwischen dem stromaufwärtigen Rand und dem stromabwärtigen Rand variiert.

4. Stromdeflektor (4) nach einem der vorstehenden Ansprüche, **dadurch gekennzeichnet, dass** die Ausstoßkanäle (6) jeder Reihe gemäß dem gleichen Winkel (α) ausgerichtet sind.

5. Stromdeflektor (4) nach einem der vorstehenden Ansprüche, **dadurch gekennzeichnet, dass** jeder Ausstoßkanal (6) einen konstanten kreisförmigen Schnitt aufweist.

6. Stromdeflektor (4) nach einem der vorstehenden Ansprüche, **dadurch gekennzeichnet, dass** die Wand sphärenförmig ist.

7. Stromdeflektor (4) nach einem der vorstehenden Ansprüche, **dadurch gekennzeichnet, dass** die Anzahl von Reihen (9) von Ausstoßkanälen (6) zwischen 20 und 30 liegt.

8. Stromdeflektor (4) nach einem der vorstehenden Ansprüche, **dadurch gekennzeichnet, dass** die Wand (5) mindestens eine erste Serie (S1) von Reihen, die stromaufwärts positioniert sind, und deren Winkel der Kanäle zweier aufeinanderfolgender Reihen identisch sind und zwischen 55° und 65° liegen, und eine zweite Serie (S2) von Reihen umfasst, die stromabwärtig positioniert sind und mindestens eine Reihe von Kanälen, deren Winkel zwischen 5° und 15° liegen, umfasst.

9. Stromdeflektor (4) nach dem vorstehenden Anspruch, **dadurch gekennzeichnet, dass** die Wand (5) eine Zwischenserie (SI) von Reihen umfasst, die zwischen der ersten Serie (S1) und der zweiten Serie (S2) liegt, wobei die Winkel der Kanäle der Reihen der Zwischenserie (SI) um einen identischen Wert zwischen jeder Reihe variieren.

10. Stromdeflektor (4) nach dem vorstehenden Anspruch, **dadurch gekennzeichnet, dass** die Variation der Winkel der Kanäle der Reihen der Zwischenserie (SI) zwischen 3° und 8° liegt.

11. Ablassventilsystem (1) eines Doppelstrom-Turbomaschinenkompressors, wobei das System umfasst:
- einen Stromdeflektor (4) nach einem der Ansprüche 1 bis 10,
- eine Leitung (17), die mit dem Stromdeflektor (4) verbunden ist und einen Warmlufteingang umfasst,
- eine Regulierungsvorrichtung (16), die es erlaubt, die Passage des Ablassluftstroms (Fc) zwischen dem Warmlufteingang der Leitung (17) und dem Stromdeflektor (4) zu regulieren, und
- einen Aktuator (15), der auf die Regulierungsvorrichtung (16) derart einwirkt, dass die Vorrichtung (16) mindestens eine erste Position belegt, in der der Warmlufteingang geschlossen ist, und eine zweite Position, in der der Warmlufteingang freigegeben ist.

12. Doppelstrom-Turbomaschine (100), die einen Primärstrom (V1), in dem ein Warmluftstrom zirkuliert, und einen Sekundärstrom (V2) umfasst, in dem ein Kaltluftstrom (F) zirkuliert, wobei die Ströme (V1, V2) durch ein Zwischenstromgehäuse (105) getrennt sind, **dadurch gekennzeichnet, dass** in dem Zwischenstromgehäuse (105) mindestens ein Ablassventilsystem (1) gemäß dem vorstehenden Anspruch eingerichtet ist.

## Claims

1. Flow deflector (4) of a discharge valve system (1) of a compressor of a double flow turbomachine, the flow deflector (4) being arranged at least in part in a flowpath (V1, V2) of the turbomachine in which circulates an air flow and comprising a wall (5) provided with a plurality of ejection channels (6) capable of discharging a discharge air flow (Fc) from the compressor in the flowpath (V1, V2) of the turbomachine (100), the ejection channels (6) being arranged in rows (9) along aligned directions that are substantially parallel to an axial plane (S) of the deflector, the ejection channels (6) of each row (9) being oriented at an angle (a) defined between a normal line (D) to the wall (5) and the axes (C) of the ejection channels, **characterised in that** the angle of the ejection channels vary by decreasing from an upstream edge to a downstream edge of the wall (5) defined along the direction of movement of a fan air flow (F) and **in that** at least the channels of at least one row situated in the proximity of the upstream edge are oriented such that the discharge flow (Fc) is substantially flush with the wall of the deflector and along the direction of movement of the air flow (F).

2. Flow deflector (4) according to the preceding claim, **characterised in that** at least one row located in the proximity of the downstream edge is provided with channels oriented, such that the discharge flow is substantially parallel to the central axis of the deflector.

3. Flow deflector (4) according to one of the preceding claims, **characterised in that** the angle (a) of the channels (6) varies from 65° to 5° between the upstream edge and the downstream edge.

4. Flow deflector (4) according to one of the preceding claims, **characterised in that** the ejection channels (6) of each row are oriented at the same angle (a).

5. Flow deflector (4) according to any one of the preceding claims, **characterised in that** each ejection channel (6) has a constant circular section.

6. Flow deflector (4) according to any one of the preceding claims, **characterised in that** the wall has a spherical shape.

7. Flow deflector (4) according to any one of the preceding claims, **characterised in that** the number of rows (9) of ejection channels (6) is between 20 and 30.

8. Flow deflector (4) according to any one of the preceding claims, **characterised in that** the wall (5) of the flow deflector comprises at least one first series (S1) of rows positioned upstream and of which the channel angles of two consecutive rows are identical and are between 55° and 65°, and a second series (S2) of rows positioned downstream and comprising at least one row of channels, the angles of which are between 5° and 15°.

9. Flow deflector (4) according to the preceding claim, **characterised in that** the wall (5) comprises an intermediate series (SI) of rows between the first series (S1) and the second series (S2), the angles of the channels of the rows of the intermediate series (SI) varying by an identical value between each row.

10. Flow deflector (4) according to the preceding claim, **characterised in that** the variation of the angles of the channels of the rows of the intermediate series (SI) is between 3° and 8°.

11. Discharge valve system (1) of a double flow turbomachine, the system comprising:
- a flow deflector (4) according to any one of claims 1 to 10,
- a duct (17) connected to the flow deflector (4) and comprising a hot air inlet,
- a regulation device (16), making it possible to regulate the passage of the discharge air flow (Fc) between the hot air inlet of the duct (17) and the flow deflector (4), and
- an actuator (15) acting on the regulation device (16), such that the device (16) occupies at least one first position wherein the hot air inlet is closed and one second position wherein the hot air inlet is open.

12. Double flow turbomachine (100) comprising a primary flowpath (V1) wherein circulates a hot air flow and a secondary flowpath (V2), wherein a cold air flow (F) circulates, the flowpaths (V1, V2) being separated by an inter-flowpath casing (105), **characterised in that**, in the inter- flowpath casing (105), at least one discharge valve system (1) according to the preceding claim is arranged.
